Europäisches Patentamt

(19) European Patent Office

Office européen des brevets

(11) Publication number: **0 121 169**
**B1**

(12) **EUROPEAN PATENT SPECIFICATION**

(45) Date of publication of patent specification: **10.08.88**

(21) Application number: **84102984.6**

(22) Date of filing: **18.03.84**

(51) Int. Cl.⁴: **H 01 M 2/18**

(54) Microporous separator for storage batteries and relative process and apparatus for continuous manufacture.

(30) Priority: **01.04.83 IT 2043483**

(43) Date of publication of application:
**10.10.84 Bulletin 84/41**

(45) Publication of the grant of the patent:
**10.08.88 Bulletin 88/32**

(84) Designated Contracting States:
**AT BE DE FR GB SE**

(56) References cited:
**WO-A-79/01057**
**GB-A- 816 713**
**US-A-2 694 744**
**US-A-3 329 559**

(73) Proprietor: **I.C.S. Industria Composizioni Stampate S.p.A.**
**Via Bergamo**
**I-24040 Canonica d'Adda (Bergamo) (IT)**

(72) Inventor: **Scotti, Pietro**
**Via Isonzo, 5**
**San Damiano Di Brugherio (Milano) (IT)**
Inventor: **Brambilla, Pierfranco**
**Via Teodosio, 44**
**Milano (IT)**
Inventor: **Magliano, Giorgio**
**Via Fratelli Cervi Residenza dei Sassi**
**Milano 2 Segrate (Milano) (IT)**

(74) Representative: **Di Iorio, Giuseppe, Dr.-Ing.**
**c/o NOVELTY SERVICE Piazza del Liberty, 8**
**I-20121 Milano (IT)**

Courier Press, Leamington Spa, England.

## Description

This invention relates to microporous separators for storage batteries, particularly starter batteries, of the type comprising a plurality of longitudinal channels and ribs.

The invention also relates to a roller drawing apparatus for continuous manufacture of such separators. Different types of separators are known having continuous ribs for storage batteries which differ from one another by the type of material used and by shape or design. The continuous ribs perform the function of defining longitudinal channels therebetween allowing the bleed or vent of gases being developed in the battery, in addition of course to assuring the required spacing between the plates of different polarity.

As to the material used, the separators may be of thermoplastic material, being in such a case obtained by sintering of thermoplastic powders. Prior to sintering and while sliding on a conveyor belt, the powder mass is shaped by means of a comb or reed, so that at the outlet of the sintering furnace the separator is formed of flat portions or channels and full ribs. Therefore, the total thickness of the separator comprises the sum of the channel thickness and rib height.

The forming of the separator may be also obtained after sintering step by a pressing of the separator strip. In GB patent No. 816.713 is indeed described a process for the continuous production of microporous separator plates or foils wherein the forming of the separators is obtained by means of embossing or profiled rollers.

Owing to the full ribs, these separators require the use of some amount of material and accordingly are quite expensive and heavy.

In addition, still because of the full ribs, they exhibit some electric resistance when assembled in the storage battery, so that there is a tendency to reduce the number of ribs to the benefit of the width of the flat portion, which facilitate the passage of the required ionic flow. Normally, the spacing between the ribs in the separator is in the range of 14 to 20 mm.

On the other hand, with a reduced number of ribs, the separator does not exhibit a sufficient longitudinal rigidity with a resulting reduction in its deflection resistance, the latter being instead a feature required when assembling of the separators with plates is effected by means of automatic machines, such as those commonly referred to as "stacking machines". In the use of these machines, during the formation of the plate packs, the separators are assembled in packs which rest on two brackets laterally arranged and are individually extracted from below the packs by means of blades of the machines.

Thus, it clearly appears that to provide an easy extraction of the separators as the same are laid on the brackets, it is necessary that in addition to not jamming with the overlying separator they should have a sufficient deflection resistance, so as to remain in alignment with the bracket plane, irrespective of the overlying load.

Moreover, with the reduced number of ribs, bearing with the plates is reduced to only the contact lines defined by the separator ribs, with the result that during the battery operation, particularly at the intensities of high overchange, the required spacing between the plates is not always assured due to the insufficient resistance to deformation of the flat portion or channel of the separator.

It is also evident that as the spacing between the ribs increases, there is a reduction in the transverse rigidity of the separator, which is therefore liable to breakage during assembling operations prior to arrangement in the battery.

It is another disadvantage in the thermoplastic separators of the prior art that the full ribs act as rigid fillets or strips, so that in contact with the active material of the plates a scaling off thereof is caused upon mechanical vibrations generated by the vehicle on which the battery is mounted.

Accordingly, the useful life of the battery is reduced.

Many of the above mentioned drawbacks also occur in other types of ribbed separators, for example in cellulose separators hardened with various resins and ribbed by longitudinal corrugations.

A type of paper separator is described in the WO—A—7901057. Starting from a thermoplastic pulp and after various treatments, the paper web is formed (ribbed) by means of embossing rollers.

These paper separators have a low transverse strength when produced in thin channels owing to the nature of the material and are therefore readily subjected to breakages as a result of impacts. Moreover, cellulose is liable to become deteriorated in contact with acids. Finally, the process of manufacture for separators is complicated and costly.

Similar remarks are also valid for cellulose separators ribbed with longitudinally extruded thermoplastic materials.

It is the object of the present invention to provide a microporous separator fitted with longitudinal channels and ribs that will eliminate the disadvantages of the prior art separators and particularly which is very economical and light, having a good transverse and longitudinal rigidity, a good electrical conductivity and assures a high number of contact points or locations with the plates. Another object of the invention is to provide a roller drawing apparatus for continuous manufacture of ribbed separators of the type particularly adapted for use of automatic machines for the formation of plate packs.

According to the invention, the above objects are achieved by a separator provided with longitudinal channels and ribs, characterized in that the ribs are hollow and the spacing from one another is of no more than 12 mm, said ribs having substantially the same thickness as the channels and that both the channels and all of the ribs or most of the latter are interrupted by hollow longitudinal projections which are present on the one side of the separator from the channels only and on the opposite side of the separator from the ribs only, being located such as to protrude from the respective hollow sides of the channels or the ribs, said projections contributing to define the two bearing planes or faces of the separator. The separator is further characterized in that the longitudinal projections of some channels follow one another at close spacing, while the longitudinal projections of the remaining channels and of the interrupted ribs follow one another at an irregular and larger spacing that that of the closely spaced apart projections, and that the projections at irregular spacing are transversely shifted of one another and in respect to the projections at close spacing.

The roller drawing apparatus for the continuous forming of a microporous material web or strip from which the separators can be obtained, is characterized in that the forming roller comprises at least a forming cylindrical portion having dimensions corresponding to those of the separator to be obtained, each portion being provided with a plurality of circumferential ridges and a plurality of circumferential grooves separated from one another at spacing of no more than 12 mm, and that both all of the circumferential ridges and all of the circumferential grooves or most of the latter are interrupted by depressions and projections respectively, and that the projections of some circumferential grooves follow one another at close spacing, while the projections of the remaining circumferential grooves and the depressions of the interrupted circumferential ridges follow one another at irregular and larger spacing than that at close spacing, and that the projections and depressions at irregular spacing are transversely shifted of one another and in respect to the projections at close spacing, all in such manner to realize on each forming cylindrical portion of the roller a configuration corresponding to the separator to be formed.

Further details and features of the separator will become apparent from the following description given by mere way of example with reference to a preferred embodiment of the invention shown in the accompanying drawings, in which:

Fig. 1 is a perspective view showing a microporous separator according to the invention;

Fig. 2 is a view showing the separator of Fig. 1, but from the opposite side;

Fig. 3 is a perspective view of two separators, forming part of a plurality of separators according to the invention, intended to be superimposed to one another;

Fig. 4 is an enlarged perspective view showing a plurality of separators of the type shown in Fig. 3 as superimposed to one another.

Fig. 5 is a sectional view of the superimposed separators of Fig. 4;

Fig. 6 is a schematic view of a system for continuous manufacture of separators according to the invention;

Fig. 7 is a view showing a length of separator strip at the outlet of the system of Fig. 6, as shaped, but prior to cut to the separator size.

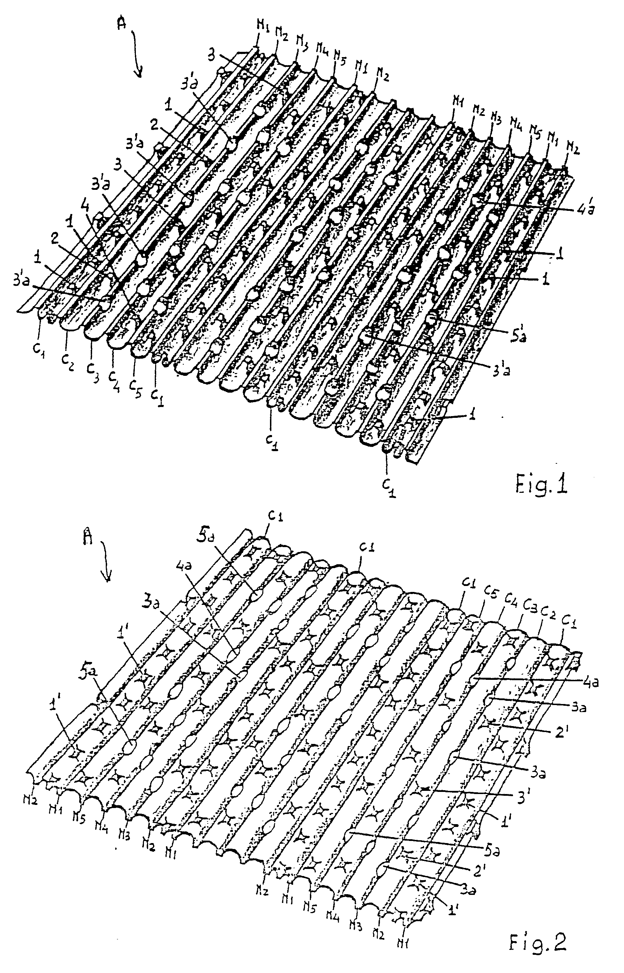

Referring to Figs. 1 and 2, a separator A comprises a plurality of longitudinal ribs $N_1$, $N_2$, $N_3$ ... $N_5$ and a plurality of longitudinal channels $C_1$, $C_2$, $C_3$ ... $C_5$ defined by said ribs.

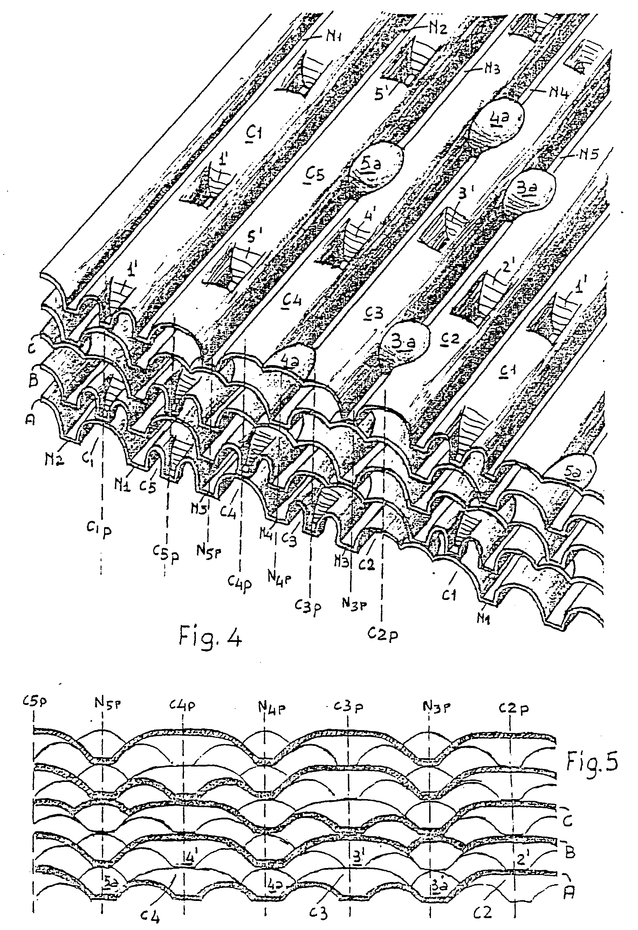

According to a first aspect of the invention the ribs, as more clearly shown in Figs. 4 and 5, are hollow and substantially have the same thickness as the channels, which may be flat or curved depending on its thickness and spacing of the ribs.

Additionally, such ribs are at very close spacing from one another with a pitch of no more than 12 mm, preferably in the range of between 6 and 12 mm, depending on practical requirements. Thus, satisfactory results have been found with a separator 153 mm wide, having 18 ribs with a pitch of 8.5 mm.

According to a further important aspect of the invention, both the channels $C_1$, $C_2$, $C_3$ ... and all of the ribs $N_1$, $N_2$, $N_3$ ... or most of the ribs $N_3$, $N_4$ ... are provided with hollow longitudinal projections, extending one the two opposite sides of the separator respectively and defining the two bearing planes or faces of the separator, as better explained in the following. In particular, the longitudinal projections of the channels, such as the projections 1, 2, 3 of channels $C_1$, $C_2$, $C_3$ (Fig. 1) extend from one side of the separator in direction of the ribs, while the longitudinal projections of the ribs, such as projections 3a, 4a, 5a of ribs $N_3$, $N_4$, $N_5$ (Fig. 2) extend from the opposite side of the separator in direction of the channels.

Thus, the channels and the ribs provided with projections are interrupted. The projections 1 of some channels $C_1$ longitudinally follow one another at close spacing and with a substantial constant pitch equal to or slightly larger than the width of channel 1 in which they are formed, while the projections in the channels and ribs between two channels $C_1$, such as projections 2, 3a, 3, 4a longitudinally follow one another at irregular and larger spacing than projections 1 of the channels $C_1$.

Referring to the drawings, said projections are those formed in the channels $C_2$ to $C_5$ and in the interrupted ribs $N_3$ to $N_5$. So that in a same separator the irregularly spaced apart projections, such as 2, 3a, 3, 4a between two channels $C_1$, are transversely shifted from one another and in respect of the projections 1 of channels $C_1$. The reason of this distribution for the projections will be explained hereinafter.

With hollow ribs and at a same total thickness of the separator, less is the required amount of material and accordingly the separators are less costly and lighter over the separators of the prior art with full ribs. Additionally, hollow ribs, having the same thin thickness as the channels, contribute to a much more degree to the passage of electric current. It is a further advantage that the rib thickening would improve the longitudinal rigidity of the separators and thus the deflection strength thereof, whereby the use of automatic machines in the formation of plate packs is particularly adapted thereto. The longitudinal projections such as 1, 2, 3a, 3 . . . together with the channels and the continuous and/or interrupted ribs, define as above mentioned the two bearing surface of the separator with the plates, which surfaces are larger than those of the conventional separators, higher being the number of contact points or locations as provided by means of the longitudinal projections and approached ribs, these last all terminating with a flat or rounded surface.

Thus, assured is a good conservation of the active material on the plates·also in view that, owing to the plurality of hollow ribs, the separator is no longer a rigid element between the plates, but acts as a flexible bearing.

Moreover, the plurality of supporting locations assure a constant interspacing between the plates under all of the battery operating conditions. Finally, the hollow ribs and projections increase the electrolyte volume available at the plates in addition to increasing the electric resistance between the plates, because of the longer path that the current should in case travel to pass from one to another plate.

The longitudinal projections, such as 3a, 4a, 5a . . . in the interrupted ribs $N_3$, $N_4$ . . . provide a lateral connection between the channels and accordingly provide the separator with characteristics of transverse rigidity. Thus, breakage of the separator are unlikely to occur during the assembling operations in the battery.

The depressions in the interrupted ribs and in the channels generating the projections 1, 2, 3, 3a, 4a . . . are denoted on the drawings by the same references as the projections, but followed by an apex ('). The depressions such as 3'a, 5'a formed on the interrupted ribs are of convex shape, and the depth thereof reach the channels level, so as to put the two adjoining channels in communication thus allowing an improved circulation of the electrolyte between the channels.

The projections such as 1, 2, 3 . . . formed in the channels $C_1$, $C_2$, $C_3$ . . . are instead of tapered shape from the base to the end. Projections of truncated pyramid have shown to be particularly suitable, as not hindering the passage of liquid or mud fall, etc.

Of course, the pyramid base should engage only a portion of the channel width, so that the liquid will continue to flow through the channel lapping on the two sides of the pyramid.

Where allowed by the channel width, instead of one pyramid, two juxtaposed pyramids could be provided, so that the longitudinal passages for the liquid would become three.

For a good extraction of the separators from a pack, it was found advantageous to maintain the height of the rib projections at the level of the plane of the channels or just below and make the end of the channel projections slightly protrude from the ribs plane;

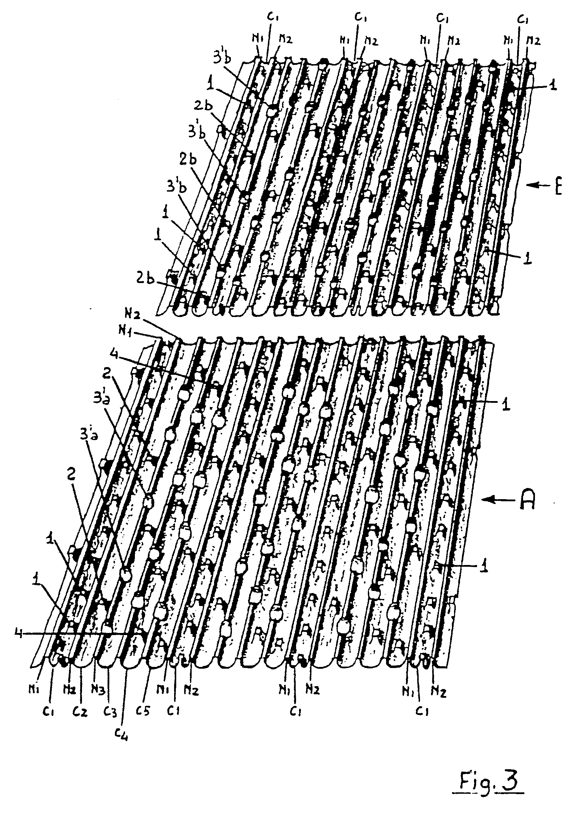

Fig. 3 shows two separators A and B comprising two elements of a plurality of separators to be stacked.

Separator A is again separator 1 of Fig. 1, while separator B is completely identical to separator A, with the only difference that the longitudinal projections between two channels $C_1$ follow one another at a different spacing from the corresponding longitudinal projections of the separator A. So, for example, the projections 2b of the channel $C_2$ and the projections 3'b of the rib $N_3$ of the separator B, follow one another at a different spacing of the corresponding projections 2 of the channel $C_2$ and of the projections 3'a of the rib $N_3$ of the separator A.

Otherwise, identical remains in the two separators the distribution of the projections 1 formed in the channels $C_1$ and the shape and size of all the projections.

Generally, for a plurality of separators intended to form a pack, there will vary the longitudinal spacing between projections of the channels and of the interrupted ribs between two channels $C_1$ of a separator with respect to the longitudinal spacing of the projections of the channels and interrupted ribs corresponding to any other separator.

Thus, in a pack of separators, due to the longitudinal and transverse shift of the projections, no projection of a separator can nest in the depression or cavity of another separator with which it is in contact, with the result that, during the extraction of any separator from the pack, no jamming would occur and the separator can be readily extracted from the pack or unit.

This particular structural feature or desig of the separators according to the invention, advantageously enables the use of automatic packing machines during the formation of the plate packs, just owing to the feature thereof of smooth sliding and resistance against the thrust of the machine blades.

Figs. 4 and 5 clearly show the configuration taken by a plurality of superimposed separators A, B, C . . . By $C_{1p}$, $C_{2p}$, $C_{3p}$, $C_{4p}$ . . . are indicated the lines of location respectively for the channels $C_1$, $C_2$, $C_3$, $C_4$ . . . of the various separators, while by $N_{3p}$, $N_{4p}$, $N_{5p}$ . . . are indicated the lines of location respectively for the ribs $N_3$, $N_4$, $N_5$ . . . of the various separators.

It should be appreciated that the ribs of each separator bear on the projections of the underlying rib. Thus, for example, the ribs $N_3$, $N_4$ . . . of separator B bear on the projections 3a, 4a . . . of the ribs $N_3$, $N_4$ . . . of the separator A.

Similarly, on each channel bear the projections of the overlying channel.

Thus, for example, the projections 3', 4' of the channels $C_3$, $C_4$ of the separator B bear on the channels $C_3$, $C_4$ of the separator A (see Fig. 5).

This particular coupling of the separators just ensures the easy longitudinal extraction thereof from the pack, when required.

For providing the above described separators, any material can be used, provided that such a material has suitable characteristics of porosity, resistance to electrolyte attack, etc.

In any case, the forming separator is obtained by a drawing operation provided on a continuous strip of web of material from a roll or a web forming system as described in the above mentioned UK Patent No. 816.713 and WO—A—79/01057.

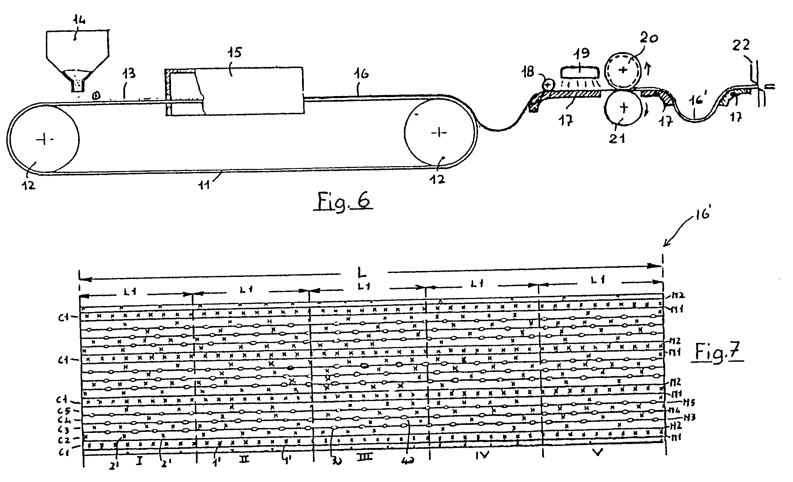

As is known, the web may be smooth or previously partly shaped and before being subjected to drawing operation, it may be in case heated, and after such an operation cut to size of the separator to be obtained. Fig. 6 schematically shows a system for continuous manufacture of separator according to the invention, comprising thermoplastic materials. Reference numeral 11 denotes a metal conveyor belt driven at constant speed by rollers 12, reference numeral 13 a thermoplastic powder, such as PVC, deposited by a hopper 14 on belt and levelled to the desired thickness, and reference numeral 15 a hot air sintering furnace, in which the powder introduced by the belt is converted to thin sinterized porous sheet 16 as continuous web or strip. Such a web may be wound up in bobbins or reels for the forming at proper time or, as shown in the figure, to be immediately subjected to the drawing operation in a roller drawing apparatus located at the outlet of the furnace 15.

This apparatus comprises supports or bearings 17 for guide of web 16, before and after drawing, at least one tension roller 18 located at the inlet, a heating device 19 for web heating before drawing, a roller apparatus 20, 21 for drawing operation, and finally a cutting device 22 for providing the sized separators from the drawn web.

Web heating by means of device 19 facilitates the next forming operation and also enables to increase the web sliding speed and as a result the production of the separators since the roller 20, 31 have only to shape the web.

In said pair of rollers, roller 20 which is made of metal, is the forming roller and accordingly has a shape suitable to the separator to be formed, while the other roller, which is smooth and made of rubber, is a pressing roller. One or both rollers are powered and roller 20 is thermo-adjustable. In order to provide a drawn web (see Fig. 7) from which the separators as before described can be obtained, the roller drawing apparatus comprises a forming roller 20 in which are provided the corresponding parts of the separator.

The forming roller 20 comprises at least a forming cylindrical portion having dimensions corresponding to the separator to be obtained. Each portion is provided with a plurality of circumferential ridges and a plurality of circumferential grooves, separated from one another at spacing of no more than 12 mm. All of the circumferential ridges or most of the latter and all of the circumferential grooves are interrupted by depressions and projections respectively, and the projections of some circumferential grooves follow one another at close spacing, while the projections of the remaining circumferential grooves and the depressions of the interrupted circumferential ridges follow one another at irregular and larger spacing than that at close spacing. Additionally, the projections and depressions at irregular spacing are transversely shifted of one another and in respect to the projections at close spacing, all in such manner to realize on the forming cylindrical portion of the roller a configuration corresponding to the separator to be formed.

Moreover, the spacing between the circumferential grooves is preferably in the range of between 6 and 12 mm.

After drawing step, the web 16' is cut to measure by the cutting device 22, the operations of which is timed with the web feeding speed.

Fig. 7 shows on enlarged scale the drawn web at the outlet of rollers 20, 21 that is prior to cutting.

Of course, said web is continuous or endless, but here only a length L thereof is considered, which length is assumed to be equal to the circumferential development of roller 20. This means that the web length 16' is the drawn web available at the roller outlet after a complete revolution of the forming roller 20.

Five separators in web 16' are indicated at I, II, III, IV, V each of a length $L_1$, obtainable after cutting according to the dashed lines. In said length of web 16', there are again the channels $C_1$, distributed transversely of the web, and the channels $C_2$, $C_3$ ... and the ribs $N_1$, $N_2$, $N_3$ ... between two channels $C_1$.

In the channels $C_1$ there are again the projections 1 at close spacing and constant pitch, and in the channels $C_2$, $C_3$ there are again the projections 2, 3 at irregular and larger spacing than that of the projections 1. The ribs $N_3$, $N_4$ ... are also shown, in which the projections 3a and 4a ... are formed, also at irregular and larger spacing than that of projections 1. Thus, the projections are longitudinally and transversely shifted, so that the design of a separator cannot be repeated with respect to that of the other separators, which in a plurality of superimposed separators prevents any projection of one separator from engaging in the hollow of another separator and causing jamming of the separators during extraction from the pack.

It was assumed that the length L of the section of web 16' corresponds to the circumferential development of roller 20 and that such development is a multiple of the length of separator I, II, III ... and particularly that L is five times $L_1$.

In such a case, after a revolution of roller 20, there is a repetition of the design of the section of web 16'. In order that the design repetitively is delayed as much as possible and that the probability is removed that two identical separators of the web come in contact during the formation of a pack of separators, according to a further aspect of the invention, use can be made of a forming roller having a different circumferential development than a multiple of the length $L_1$, of a separator to be obtained. Thus, in the example of Fig. 7, if $L_1=12$ cm, the circumferential length of roller 20 will be larger or lower than a multiple of 12 cm, for example can be larger than $(12\times5)60$ cm.

The embodiment of the separator and production means above described are not restrictive at all. Thus, changes and modifications can be made to the foregoing in the light of the appended claims. Thus, for example, the number of channels $C_1$ may vary depending on the separator width and material used. In a narrow separator, only one channel $C_1$ may suffice, as formed on the center line of the separator. At the central zone, also two channels $C_1$ could be provided, so that some channels with projections at irregular spacing would lie on the two sides of channels $C_1$.

Additionally, it is not necessary that the pitch of the projections in said channels $C_1$ is strictly constant. It is instead required that such projections are quite close to one another, as they should mainly ensure the spacing apart between the plates.

Again, in a separator some projections of the channels are interrupted ribs between two channels $C_1$ could follow one another at a same spacing. It is essential that a transverse shift would exist between the projections following at irregular spacing and the projections following at close spacing of one separator. And, again, a longitudinal shift would exist between the projections following at irregular spacing of one separator in respect to the corresponding projections of another separator intended to be superimposed thereto.

**Claims**

1. A microporous separator for storage batteries, particularly starter batteries, of the type comprising a plurality of ribs and longitudinal channels, characterized in that the ribs ($N_1$, $N_2$, $N_3$ ...) are hollow and the spacing from one another is of no more than 12 mm, said ribs having substantially the same thickness as the channels ($C_1$, $C_2$, $C_3$ ...) and that both the channels and all of the ribs ($N_1$, $N_2$, $N_3$ ...) or most of the latter ($N_3$, $N_4$ ...) are interrupted by hollow longitudinal projections which are present on the one side of the separator from the channels only and on the opposite side of the separator from the ribs only, being located such as to protrude from the respective hollow sides of the channels or the ribs, said projections contributing to define the two bearing planes or faces of the separator.

2. A microporous separator as claimed in Claim 1, characterized in that the longitudinal projections (1) of some channels ($C_1$) follow one another at close spacing, while the longitudinal projections (2, 3 ...) of the remaining channels ($C_2$, $C_3$ ...) and of the interrupted ribs ($N_3$, $N_4$ ...) follow one another at an irregular and larger spacing than that of the closely spaced apart projections (1), and that the projections at irregular spacing (2, 3 ...) are transversely shifted of one another and in respect to the projections at close spacing (1).

3. A microporous separator as claimed in Claims 1 and 2, characterized in that the spacing between the ribs ($N_1$, $N_2$, $N_3$ ...) is in the range of between 6 and 12 mm.

4. A microporous separator as claimed in Claims 2 and 3, characterized in that the projections at close spacing (1) have a constant pitch.

5. A microporous separator as claimed in Claim 4, characterized in that the constant pitch of the projections at close spacing (1) is substantially the same as the width of the channels ($C_1$) in which they are formed, or slightly larger than said width.

6. A microporous separator as claimed in the preceding Claims, characterized in that the ribs ($N_1$, $N_2$, $N_3$ ...) terminate with a flat or rounded surface.

7. A microporous separator as claimed in the preceding Claims, characterized in that the longitudinal projections formed in the channels ($C_1$, $C_2$, $C_3$ ...) are of tapered shape, as a truncated pyramid, and that the base of such projections partly engages the width of the channels, so that in use the flow of electrolyte therethrough is assured by at least the side passages of the projections.

8. A microporous separator as claimed in the preceding Claims, characterized in that longitudinal projections (3a, 4a ...) of the interrupted ribs ($N_3$, $N_4$ ...) are of such a depth that two adjacent channels ($C_3$, $C_4$ ...) are communicated.

9. Roller drawing apparatus for the continuous forming of a microporous material web or strip from which the separator according to Claims 1 to 8 can be obtained, characterized in that the forming roller (20) comprises at least a forming cylindrical portion having dimensions corresponding to those of the separator to be obtained, each portion being provided with a plurality of circumferential ridges and a plurality of circumferential grooves separated from one another at spacing of no more than 12 mm and that both all of the circumferential ridges and all of the circumferential grooves or most of the latter are interrupted by depressions and projections respectively, and that the projections of some circumferential grooves follow one another at close spacing, while the projections of the remaining circumferential grooves and the depressions of the interrupted circumferential ridges follow one another at irregular and larger spacing than that at close spacing, and that the projections and depressions at irregular spacing are transversely shifted of one another and in respect to the projections at close spacing, all in such manner to realize on each forming cylindrical portion of the roller a configuration corresponding to the separator to be formed.

10. Roller drawing apparatus as claimed in Claim 9, characterized in that the spacing between the circumferential grooves is in the range of between 6 and 12 mm.

11. Roller drawing apparatus as claimed in the Claims 9 and 10, characterized in that the circumferential development of roller is of a different length than a multiple of the separator to be obtained.

12. Use of microporous separators according to Claims 1 to 8 as separators in storage batteries, particularly starter batteries.

**Patentansprüche**

1. Mikroporöser Separator (Plattenscheider) für Sammlerbatterien, insbesondere für Starterbatterien, mit einer Vielzahl von Rippen und longitudinalen Rillen, dadurch gekennzeichnet, daß die Rippen ($N_1$, $N_2$, $N_3$, . . .) hohl sind und ihr gegenseitiger Abstand nicht mehr als 12 mm beträgt, die Rippen im wesentlichen dieselbe Höhe wie die Rillen ($C_1$, $C_2$, $C_3$, . . .) haben und daß sowohl die Rillen als auch alle Rippen ($N_1$, $N_2$, $N_3$, . . .) oder die meisten von ihnen ($N_3$, $N_4$, . . .) durch hohle Längs-Vorsprünge unterbrochen sind, die an der einen Seite des Plattenausscheiders nur von den Rillen und an der gegenüberliegenden Seite nur von den Rippen ausgehen und so angeordnet sind, daß sie von den jeweiligen hohlen Seiten der Rillen oder der Rippen abstehen, wobei die Vorsprünge zur Definition der beiden Anlageebenen der Trennplatte beitragen.

2. Mikroporöser Plattenscheider nach Anspruch 1, dadurch gekennzeichnet, daß die Längsvorsprünge (1) einiger Rillen ($C_1$) in einem engen Abstand aufeinander folgen, während die Längs-Vorsprünge (2, 3, . . .) der restlichen Rillen ($C_2$, $C_3$, . . .) und der unterbrochenen Rippen ($N_3$, $N_4$, . . .) in einem unregelmäßigen und größeren Abstand als dem der eng beabstandeten Vorsprünge (1) aufeinander folgen, und daß die mit unregelmäßigen Abständen angeordneten Vorsprünge (2, 3, . . .) zueinander und in Bezug auf die eng beabstandeten Vorsprünge (1) in Querrichtung gegeneinander versetzt oder verschoben sind.

3. Mikroporöser Plattenscheider nach Anspruch 1 und 2, dadurch gekennzeichnet, daß der Abstand zwischen den Rippen ($N_1$, $N_2$, $N_3$, . . .) im Bereich zwischen 6 und 12 mm liegt.

4. Mikroporöser Plattenscheider nach Anspruch 2 und 3, dadurch gekennzeichnet, daß die eng beabstandeten Vorsprünge (1) einen konstanten Abstand aufweisen.

5. Mikroporöser Plattenscheider nach Anspruch 4, dadurch gekennzeichnet, daß der konstante Abstand der eng beabstandeten Vorsprünge (1) im wesentlichen gleich der Breite der Rillen ($C_1$), in denen sie ausgebildet sind oder geringfügig größer als diese Breite ist.

6. Mikroporöser Plattenscheider nach den vorhergehenden Ansprüchen, dadurch gekennzeichnet, daß die Rippen ($N_1$, $N_2$, $N_3$, . . .) (nach oben) von einer flachen oder gerundeten Fläche begrenzt sind.

7. Mikroporöser Plattenscheider nach den vorhergehenden Ansprüchen, dadurch gekennzeichnet, daß die in den Rillen ($C_1$, $C_2$, $C_3$, . . .) ausgebildeten Längs-Vorsprünge eine sich verjüngende Form, etwa in Form eines Pyramidenstumpfes, aufweisen und daß die Grundfläche dieser Vorsprünge einen Teil der Rillen-Breite einnimmt, so daß im Gebrauch das Hindurchfließen des Elektrolyts zumindest durch die seitlich zu den Vorsprüngen liegenden Durchlässe gesichert ist.

8. Mikroporöser Plattenscheider nach den vorhergehenden Ansprüchen, dadurch gekennzeichnet, daß die Längs-Vorsprünge (3a, 4a, . . .) der unterbrochenen Rippen ($N_3$, $N_4$, . . .) eine solche Tiefe aufweisen, daß zwei (einander) benachbarte Rillen ($C_3$, $C_4$, . . .) miteinander verbunden sind.

9. Walzenziehvorrichtung zum kontinuierlichen Formen eines mikroporösen Materialbandes oder -streifens, aus dem Plattenscheider nach den Ansprüchen 1 bis 8 hergestellt werden können, dadurch gekennzeichnet, daß die Formwalze (20) mindestens einen zylindrischen Formabschnitt mit Abmessungen entsprechend denen des herzustellenden Plattenscheiders aufweist, wobei jeder Abschnitt mit einer Vielzahl von peripher umlaufenden Stegen und einer Vielzahl von umlaufenden Nuten, die mit einem Abstand von nicht mehr als 12 mm voneinander getrennt sind, versehen ist, und alle umlaufenden Stege und alle umlaufenden Nuten, zumindest der größte Teil der letzteren, durch Vertiefungen (Eindrückungen) bzw. Vorsprünge (Erhebungen) unterbrochen sind, daß die Vorsprünge einiger umlaufender Nuten mit einem engen Abstand aufeinander folgen, während die Vorsprünge der restlichen umlaufenden Nuten und die Vertiefungen der unterbrochenen umlaufenden Stege mit einem unregelmäßigen Abstand, der größer ist als der enge Abstand, aufeinander folgen, und daß die in unregelmäßigen Abständen angeordneten Vorsprünge und Vertiefungen in Querrichtung zueinander und in Bezug auf die eng beabstandeten Vorsprünge jeweils so versetzt oder verschoben sind, daß an jedem zylindrischen Formabschnitt der Walze eine dem herzustellenden Plattenscheider entsprechende Ausgestaltung realisiert ist.

10. Walzenziehvorrichtung nach Anspruch 9, dadurch gekennzeichnet, daß der Abstand zwischen den umlaufenden Nuten im Bereich zwischen 6 und 12 mm liegt.

11. Walzenziehvorrichtung nach Anspruch 9 und 10, dadurch gekennzeichnet, daß die Umfangsabwicklung der Walze eine von einem Mehrfachen (der Länge) der herzustellenden Trennplatte verschiedene Länge aufweist.

12. Verwendung des mikroporösen Plattenscheiders nach den Ansprüche 1 bis 8 als solche in Akkumulatoren, insbesondere in Starterbatterien.

**Revendications**

1. Séparateur microporeux pour accumulateurs, en particulier pour batteries de démarrage, du type comprenant plusieurs nervures et canaux longitudinaux, caractérisé en ce que les nervures ($N_1$, $N_2$, $N_3$ . . .) sont creuses et l'espacement entre elles ne dépasse pas 12 mm, lesdites nervures ayant environ la même épaisseur que les canaux ($C_1$, $C_2$, $C_3$ . . .) et en ce que les canaux et toutes les nervures ($N_1$, $N_2$, $N_3$ . . .) ou la majeure partie de nervures ($N_3$, $N_4$ . . .) sont interrompus par des projections creuses longitudinales, que présentent sur un côté du séparateur les canaux seulement et sur le côté opposé du séparateur les nervures seulement, lesdites projections sortant des côtés creux respectifs des canaux ou des nervures définissant deux plans ou faces d'appui du séparateur.

2. Séparateur selon la revendication 1, caractérisé en ce que les projections longitudinales (1) der certains canaux ($C_1$) présentent un faible espacement entre elles, tandis que les projections longitudinales (2, 3 . . .) de canaux restants ($C_2$, $C_3$ . . .) et der nervures interrompues ($N_3$, $N_4$ . . .) se suivent avec espacement irrégulier et plus grand que l'espacement des projections (1) présentant un faible espacement et que les projections avec espacement irrégulier (2, 3 . . .) sont décalées transversalement entre elles et par rapport aux projections présentant un faible espacement (1).

3. Séparateur selon les revendications 1 et 2, caractérisé en ce que l'espacement entre les nervures ($N_1$, $N_2$, $N_3$ . . .) si situe entre 6 et 12 mm.

4. Séparateur selon les revendications 2 et 3, caractérisé en ce que les projections présentant un faible espacement (1) ont un écartement constant.

5. Séparateur selon la revendication 4, caractérisé en ce que l'écartement constant des projections présentant un faible espacement (1) est environ la même que la largeur des canaux ($C_1$) à partir desquels elles sont formées ou une largeur legèrement plus grande.

6. Séparateur selon l'une des revendications précédentes, caractérisé en ce que les nervures ($N_1$, $N_2$, $N_3$ . . .) se terminent par une face plane ou arrondie.

7. Séparateur selon l'une des revendications précédentes, caractérisé en ce que les projections longitudinales formées dans les canaux ($C_1$, $C_2$, $C_3$ . . .) ont une forme conique, telle qu'une pyramide tronquée, et en ce que la base de ces projections s'engagent partiellement dans la largeur des canaux, de façon à ce que, lors du fonctionnement, l'écoulement de l'électrolyte soit assuré au moins par les côtés latéraux de projections.

8. Séparateur selon l'une des revendications précédentes, caractérisé en ce que les projections longitudinales (3a, 4a . . .) des nervures interrompues ($N_3$, $N_4$ . . .) ont une profondeur telle, que deux canaux adjacents ($C_3$, $C_4$ . . .) communiquent entre eux.

9. Installation de laminage pour la fabrication en continu des feuilles ou bandes de matériau microporeux dont on obtient le séparateur selon les revendications 1 à 8, caractérisée en ce que le rouleau de production (20) comprend au moins une portion cylindrique de formage dont les dimensions correspondant à celles du séparateur que l'on cherche à obtenir, chaque portion étant pourvue de plusieurs stries circonférentielles et plusieurs cannelures circonférentielles, séparées l'une de l'autre de 12 mm au maximum, en ce que toutes les stries circonférentielles et toutes les cannelures circonférentielles ou la majeure partie de ces dernières sont interrompues respectivement par des dépressions et des projections et en ce que les projections de certaines cannelures circonférentielles se suivent avec un faible espacement, tandis que les projections de cannelures circonférentielles restantes et les dépressions de stries circonférentielles interrompues se suivent avec un espacement irrégulier et plus grand que l'espacement rapproché et que les projections et les dépressions avec espacement irrégulier sont décalées transversalement l'une par rapport à l'autre et par rapport aux projections avec faible espacement, le tout de façon à réaliser sur chaque portion cylindrique de formage du rouleau une configuration correspondant au séparateur que l'on cherche à produire.

10. Installation de laminage selon la revendication 9, caractérisée en ce que l'espacement entre les cannelures circonférentielles est situé entre 6 et 12 mm.

11. Installation selon les revendications 9 et 10, caractérisée en ce que la longueur de la circonférence du rouleau possède une valeur différente du multiple du séparateur.

12. Application de séparateurs microporeux selon les revendications 1 à 8 comme séparateurs de batteries, en particulier de batteries de démarrage.

0 121 169

Fig.1

Fig.2

0 121 169

Fig. 3

2

Fig. 4

Fig. 5

Fig.6

Fig.7